# EUROPÄISCHE PATENTSCHRIFT

(11) **EP 1 797 657 B1**
(45) Veröffentlichungstag und Bekanntmachung des Hinweises auf die Patenterteilung: **09.04.2008**
(21) Anmeldenummer: 05779182.4
(22) Anmeldetag: 08.09.2005
(51) Int. Cl.: H04H 1/00, H04Q 7/32, H04L 29/12

(54) **Verfahren zur Zuweisug einer Empfangs-Adresse zu einem Telekommunikations-Endgerät mit einer unidirektionalen Empfangsschnittstelle**
Method for assigning a receiving address to a telecommunications terminal using a unidirectional receiving interface
Procédé pour allouer une adresse de réception à un terminal de télécommunication au moyen d'une interface de réception unidirectionnelle

(30) Priorität: 30.09.2004 DE 102004047695
(43) Veröffentlichungstag der Anmeldung: 20.06.2007
(73) Patentinhaber: Nokia Siemens Networks GmbH & Co. KG, 81541 München (DE)
(72) Erfinder: PANDOLFI, Alessandra, 80797 München (DE); SCHIELEIN,Michael, 80997 München (DE)
(86) Internationale Anmeldenummer: PCT/EP2005/054447
(87) Internationale Veröffentlichungsnummer: WO 2006/034947

(56) Entgegenhaltungen:
- EP-A- 1 388 993
- WO-A-03/047148

## Beschreibung

Die vorliegende Erfindung betrifft ein Verfahren zur Zuweisung einer Empfangs-Adresse zu einem Telekommunikations-Endgerät, das über eine unidirektionale Empfangsschnittstelle verfügt.

Derartige Verfahren sind aus dem Stand der Technik bekannt. So sind z.B. Verfahren bekannt, bei welchen ein Mobilfunkgerät über eine bidirektionale GPRS-Schnittstelle bei einem Netzwerk-Server eine IP-Adresse (IP: Internet Protocol) zum Empfang von Videodaten von einem Videodaten-Dienstleister beantragt. Der Netzwerk-Server überprüft dann die Berechtigung der Anfrage bei dem Zugangs-Server und weist bei positiver Antwort über die GPRS-Schnittstelle dem Mobiltelefon eine IP-Adresse zu. Diese IP-Adresse kann dann auch dem Video-Datendienstleister übermittelt werden. Die Video-Daten werden dann vom Videodaten-Dienstleister unter Verwendung der zugewiesenen IP-Nummer an das Mobiltelefon geschickt, wobei dieses die Videodaten unter Benutzung der IP-Adresse über eine unidirektionale Empfangs-Funkschnittstelle empfängt. Falls der Videodaten-Dienstleister die IP-Adresse nicht kennt, werden in einem weiteren Protokoll Videodaten mit Angabe der IP-Adresse z.B über GPRS angefordert und vom Videodaten-Dienstleister über die unidirektionale Schnittstelle unter dieser IP-Adresse gesendet.

Das Dokument WO 03/047148 A2 offenbart die Versendung von Multicast Daten an mehrere Teilnehmerstationen die die an sie gerichteten Daten anhand von inhaltsspezifischen Filterparametern individuell empfangen und verarbeiten.

Es ist ein Nachteil des Stands der Technik gemäß der vorstehenden Beschreibung, dass zur Zuweisung einer Empfangsadresse für den Datenempfang von einem Dienstleister über eine unidirektionale Schnittstelle das empfangende Mobiltelefon immer in Verhandlung über die Zuweisung einer entsprechenden Empfangsadresse mit einem Netzwerk-Server treten muss. Diese die Zugangsverhandlungen zwischen Telekommunikations-Endgerät und der Dienste-Steuerungsstelle dadurch zum Beispiel in kürzerer Zeit und/oder mit geringerer Kanalbelegung ausgeführt werden können.

Weiterhin kann vorgesehen sein, dass der Informations-Datenstrom insgesamt nur von bestimmten berechtigten Empfängern gelesen werden kann und/oder die im Informations-Datenstrom enthaltenen Empfangsadressen nur von bestimmten zugelassenen Empfängern gelesen werden können. In diesem Fall können die Zugangsverhandlungen zwischen Telekommunikations-Endgerät und Dienste-Steuerungsstelle weiter vereinfacht werden, da vorgesehen sein kann, dass sich die Zulassung zur Verwendung der Empfangs-Adresse allein schon aus der Tatsache ergibt, dass das Telekommunikations-Endgerät den Informations-Datenstrom bzw. die Vielzahl verfügbarer Empfangsadressen berechtigt lesen kann. Somit kann in diesem Fall unter Umständen sogar eine zusätzliche Überprüfung bezüglich einer Berechtigung des Anfragenden zur Anforderung einer Empfangs-Adresse unterbleiben oder der Aufwand dafür zumindest eingeschränkt werden.

Empfangsadressen können beispielsweise sogenannte IP-Adressen (IP: Internet Protocol) sein, welche zur Identifikation von Empfängern für Daten verwendet werden, welche über das Internet oder andere drahtgebundene und/oder drahtlose Daten-Netzwerke vermittels des Internet Protocols versendet werden. Weiterhin kann eine Empfangs-Adresse z.B. auch eine E-Mail-Adresse oder eine spezielle von der Dienste-Steuerungsstelle vergebene Identifikationsadresse sein.

Telekommunikations-Endgeräte können beispielsweise mobile Telekommunikations-Endgeräte wie Mobiltelefone oder mit einem Mobilfunkmodul versehene Datenverarbeitungseinrichtungen (z.B. Organizer, Palmtops, Laptops oder PCs) sein. Weiterhin können Telekommunikations-Endgeräte auch zur Verbindung mit einem Fest-Telekommunikationsnetz, wie beispielsweise einem Telefonnetz oder einem Datennetz (z.B. Internet, Intranet) ausgebildet sein.

Die unidirektionale Datenschnittstelle sowie ein zugehöriger Telekommunikationskanal kann beispielsweise zur Übertragung von Multimedia-Daten, wie beispielsweise Video-, Bild-, Ton-und/oder Textdaten, an das Telekommunikations-Endgerät eingerichtet sein. Der entsprechende Datenkanal kann beispielsweise ein DvB-Kanal (DvB: Digital Video Broadcast) sein, der beispielsweise zur Übertragung von Videodaten (Fernsehdaten, Bezahl-Fernsehen) an das Telekommunikations-Endgerät verwendet werden kann.

Bei der Bereitstellung der Vielzahl verfügbarer Empfangsadressen kann von der Dienste-Steuerungsstelle vorgesehen sein, dass nur eine Empfangsadresse zur Verfügung gestellt wird. In einer vorteilhaften Ausgestaltung werden aber zwei oder mehr Empfangsadressen von der Dienste-Steuerungsstelle zur Verfügung gestellt. Bei der Bereitstellung von mehr als einer Empfangs-Adresse können mehrere Telekommunikations-Endgeräte eine Empfangs-Adresse entnehmen, was die Effizienz des beschriebenen Verfahrens weiter erhöht. Bei der Bereitstellung von zwei oder mehr Empfangsadressen kann das Telekommunikations-Endgerät zum Beispiel die erste Empfangs-Adresse aus einer bereitgestellten Liste von Empfangs-Adressen auswählen. Die Auswahl kann aber zum Beispiel auch nach dem Zufallsprinzip erfolgen.

Die vorstehend beschriebene Aufgabe wird weiterhin gelöst von einem Verfahren zur Zuweisung einer Empfangsadresse zu einem Telekommunikations-Endgerät über eine unidirektionale Datenschnittstelle, umfassend die Schritte:
a) Bereitstellung einer Empfangsadressen-Information von einer Dienste-Steuerungsstelle;
b) Empfang eines Informations-Datenstroms, umfassend Dienstedaten von der Dienste-Steuerungsstelle und die Empfangsadressen-Information durch das Telekommunikations-Endgerät über die unidirektionale Datenschnittstelle;
c) Erstellen einer ausgewählten Empfangs-Adresse durch das Telekommunikations-Endgerät aus der Empfangsadressen-Information und einer im Telekommunikations-Endgerät gespeicherten Geräte-Kennung;
d) Übertragung einer Bestätigungs-Nachricht bezüglich der ausgewählten Empfangs-Adresse vom Telekommunikations-Endgerät über eine bidirektionale Schnittstelle an die Dienste-Steuerungsstelle.

Die vorstehend zur Empfangsadresse, zum Telekommunikations-Endgerät und zur unidirektionalen Datenschnittstelle gemachten Bemerkungen gelten auch für das im voranstehenden Absatz beschriebene Verfahren.

Die Empfangsadressen-Information kann eine Netzwerkspezifische Information sein, die zum Erhalt einer vollständigen Empfang-Adresse noch vervollständigt werden muss. So kann die Empfangsadressen-Information zum Beispiel eine IP-Adress-Präfix sein, der ein bestimmtes Subnetz in einem drahtgebundenen oder drahtlosen IP-Netzwerk beschreibt, in welchem sich das Telekommunikations-Endgerät befindet. Weiterhin kann die Empfangsadressen-Information auch eine für einen Dienst und/oder einen Diensteanbieter charakteristische Kennung sein.

Die Geräte-Kennung kann beispielsweise eine dem Gerät speziell zugeordnete Kennnummer sein. Bei Mobilfunkgeräten können solche Nummern beispielsweise eine sogenannte "International Mobile Station Equipment Identity" (IMEI) oder eine "International Mobile User Number" (IMUN) oder eine MAC-Adresse (MAC: Medium Access Control) sein. Diese Nummern werden eindeutig einem Mobilfunk-Endgerät zugeordnet. Die Geräte-Kennung kann aber auch eine andere gerätetypische oder nutzerspezifische Zahl sein.

Das Erstellen der ausgewählten Empfangsadresse kann beispielsweise gemäß dem Internet-Protokoll Version 6 erfolgen. In diesem Fall kann die Empfangsadressen-Information eine Subnetz-Nummer oder eine dem Subnetz zugeordnete Nummer sein. Die Geräte-Kennung entspricht dann den im Internet Protocol, Version 6 genannten möglichen Geräte-Kennungen. Das Telekommunikations-Endgerät kann dann aus der Subnetz-Nummer (Präfix) und einer Geräte-Kennung nach einer standardisierten Vorschrift eine gültige und eindeutige IP-Adresse bilden.

Dienste-Steuerungsstellen im Sinne der vorstehend beschriebenen Verfahren können z.B. eine Server-Einrichtung und eine Diensteanbieter-Einrichtung umfassen. Dabei kann die Server-Einrichtung zur Vergabe der Vielzahl verfügbarer Empfangsadressen oder der Empfangsadressen-Information eingerichtet sein. Weiterhin kann die Server-Einrichtung zum Empfang der Bestätigungs-Nachricht bezüglich der vom Telekommunikations-Endgerät ausgewählten Empfangsadresse vorgesehen sein. Die Diensteanbieter-Einrichtung kann zur Bereitstellung und Übertragung der Dienste-Daten eingerichtet sein. Eine Diensteanbieter-Einrichtung kann z.B. ein DvB-Provider und die entsprechenden Dienste-Daten können dann DvB-Daten sein (DvB: Digital Video Broadcast).

Der Empfang des Informations-Datenstroms kann z.B. über einen für mehrere Teilnehmer zugänglichen Datenkanal (z.B. ein sogenannter Multicast-Kanal) oder auch einen allgemein empfangbaren Kanal (z.B. ein sogenannter Broadcast-Kanal) erfolgen. Auf diese Weise können mehrere Teilnehmer einen Zugang zu den verfügbaren Empfangsadressen bzw. der Empfangsadressen-Information haben und so das beschriebene Verfahren nützen.

Dienste-Daten können beispielsweise Multimedia-Daten sein, die z.B. Video- und/oder Bild- und/oder Audio- und/oder TextDaten umfassen können.

Die Integration der Dienste-Daten und der Vielzahl verfügbarer Empfangsadressen bzw. der Empfangsadressen-Information in den Informations-Datenstrom kann z.B. derart erfolgen, dass die Vielzahl verfügbarer Empfangsadressen und/oder die Empfangsadressen-Information mindestens einmal, aber bevorzugt auch mehrfach innerhalb des Informations-Datenstroms wiederholt wird.

Weiterhin kann vorgesehen sein, dass die Vielzahl verfügbarer Empfangsadressen und/oder die Empfangsadressen-Information in regelmäßigen Zeitabständen innerhalb des Informations-Datenstroms mindestens einmal wiederholt wird. Auf diese Weise lässt sich der Zugang von Telekommunikations-Endgeräten zu den im Informations-Datenstrom enthaltenen Adressdaten weiter vereinfachen, da auf diese Weise zum Beispiel Wartezeiten des Telekommunikations-Endgeräts auf entsprechende Adressinformationen reduziert werden können.

Die bidirektionale Schnittstelle des Telekommunikations-Endgeräts kann beispielsweise als Funkschnittstelle ausgebildet sein. Solche Funkschnittstellen können beispielsweise Mobilfunk-Schnittstellen gemäß dem GSM-, GPRS-, UMTS-, CDMA-2000-, TD-SCDMA-Standard oder ähnlichen Standards sein. Weiterhin können Funkschnittstellen auch lokale Funknetze, wie beispielsweise nach dem DECT-, WLAN-, WiMAX- oder dem Bluetooth-Standard sein. Die bidirektionale Schnittstelle kann weiterhin auch als drahtgebundene Schnittstelle z.B. an ein Telefon oder Datennetz (z.B. Internet, Ethernet) ausgebildet sein.

Durch die im Schritt d) des vorstehend beschriebenen Verfahrens erfolgte Benachrichtigung der Dienste-Steuerungsstelle über die vom Telekommunikations-Endgerät ausgewählte Empfangsadresse wird sichergestellt, dass zum einen bekannt ist, dass das Telekommunikations-Endgerät nun zur Versendung spezieller Daten unter der Empfangsadresse erreicht werden kann. Solche speziellen Daten können beispielsweise vom Benutzer des Telekommunikations-Endgeräts bezahlte Dienste, wie z.B. Videos (z.B. Filme), Audiodaten (z.B. Klingeltöne, Jingles, Musikstücke) oder Bilder sein. Zum anderen kann die Dienste-Steuerungsstelle dann dafür Sorge tragen, dass die dem Telekommunikations-Endgerät zugeordnete Empfangsadresse nicht nochmals vergeben wird.

Weiterhin kann vorgesehen sein, dass nach dem Schritt d) in einem der vorstehend beschriebenen Verfahren ein weiterer Schritt erfolgt:
e) Übertragung einer Antwort-Nachricht von der Dienste-Steuerungsstelle zum Telekommunikations-Endgerät, wobei die Antwort-Nachricht eine Information über eine zugewiesene Empfangs-Adresse für den Empfang von Daten durch das Telekommunikations-Endgerät über die unidirektionale Schnittstelle umfasst.

Eine solche Information über eine zugewiesene Empfangsadresse kann beispielsweise die Information sein, dass die vom Telekommunikations-Endgerät ausgewählte Empfangsadresse von der Dienste-Steuerungsstelle akzeptiert wird. In diesem Fall ist die zugewiesene Empfangsadresse dann gleich der ausgewählten Empfangsadresse. Weiterhin kann die Information über eine zugewiesene Empfangsadresse auch die ausgewählte und dementsprechend dann zugewiesene Empfangsadresse sein. Weiterhin kann die Information über eine zugewiesene Empfangsadresse auch eine neue Empfangsadresse sein, z.B. wenn die vom Telekommunikations-Endgerät ausgewählte Empfangsadresse bereits vergeben wurde. In diesem Fall ist die zugewiesene Empfangs-adresse dann diese neue Empfangsadresse und ungleich der ursprünglich ausgewählten Empfangsadresse. Es kann also vorgesehen sein, dass die zugewiesene Empfangsadresse gleich der ausgewählten Empfangsadresse ist, wenn die ausgewählte Empfangsadresse noch nicht vergeben wurde. Weiterhin kann die zugewiesene Empfangsadresse ungleich der ausgewählten Empfangsadresse sein, wenn die ausgewählte Empfangsadresse bereits vergeben wurde.

In einer Ausgestaltung der Erfindung kann vorgesehen sein, dass das Telekommunikations-Endgerät die Antwort-Nachricht von der Dienste-Steuerungsstelle über die bidirektionale Schnittstelle empfängt. In diesem Fall kann das Telekommunikations-Endgerät derart eingerichtet sein, dass die Verhandlungen des Telekommunikations-Endgeräts mit der Dienste-Steuerungsstelle über eine Empfangsadresse über die bidirektionale Schnittstelle abgewickelt wird. Dies erhöht die Flexibilität der Verhandlungen, da in Ausnahmefällen auch das mehrfache Hin- und Herschicken von Nachrichten notwendig werden kann.

Weiterhin kann vorgesehen sein, dass bei einem Verfahren gemäß der vorstehenden Beschreibung nach Schritt d) oder e) ein weiterer Schritt folgt:
f) Bereitstellung einer neuen Vielzahl verfügbarer Empfangsadressen von der Dienste-Steuerungsstelle, wobei die neue Anzahl verfügbarer Empfangsadressen die ausgewählte und/oder die zugewiesene Empfangsadresse nicht umfasst.

Es kann beispielsweise vorgesehen sein, dass, wenn die vom Telekommunikations-Endgerät ausgewählte Empfangsadresse noch nicht vergeben wurde, keine Antwortnachricht von der Dienste-Steuerungsstelle erfolgt. Die Dienste-Steuerungsstelle kann dann die ausgewählte Empfangsadresse entweder z.B. aus der Vielzahl verfügbarer Empfangsadressen streichen und so eine neue, um eine Adresse reduzierte Vielzahl verfügbarer Empfangsadressen zur Verfügung stellen oder auch statt der ausgewählten Empfangsadresse eine oder mehrere zusätzliche Empfangsadressen der um die ausgewählte Empfangsadresse reduzierte Vielzahl verfügbarer Empfangsadressen hinzufügen. Auf diese Weise kann zum einen vermieden werden, dass eine Empfangsadresse mehrfach vergeben wird. Zum anderen kann so dafür Sorge getragen werden, dass ständig freie Empfangsadressen für potentielle Empfänger zur Verfügung stehen.

In einer vorteilhaften Ausgestaltung der Erfindung kann vorgesehen sein, dass die Vielzahl verfügbarer Empfangsadressen als "Pseudoadressen" ausgebildet sind und die zugewiesene Empfangsadresse ungleich der ausgewählten Empfangsadresse ist. "Pseudoadressen" sind keine direkt verwendbaren Empfangs-Adressen sondern dienen quasi als Platzhalter und müssen erst beispielsweise von der Dienste-Steuerungsstelle in reale Empfangs-Adressen umgewandelt werden. Die Verwendung solcher Pseudoadressen erhöht die Sicherheit des beschriebenen Verfahrens für den Benutzer des Telekommunikations-Endgeräts und einen Diensteanbieter zusätzlich, da die später verwendete, zugewiesene Empfangsadresse nicht bereits über den unter Umständen breiter zugänglichen Informations-Datenstrom bekannt wird. Bei dieser Ausführungsform wird dann die ausgewählte Pseudoadresse mit der Bestätigungs-Nachricht an die Dienste-Steuerungsstelle gesandt. Mit der Antwort-Nachricht von der Dienste-Steuerungsstelle wird dann nachfolgend die zugewiesene Empfangsadresse, die dann für den Empfang von Daten über die unidirektionale Schnittstelle verwendet wird, dem Telekommunikations-Endgerät mitgeteilt.

Um immer eine genügende Anzahl von unbenutzten möglichen Empfangsadressen zu haben, kann vorgesehen sein, dass die Zuordnung der ausgewählten Empfangsadresse und/oder der zugewiesenen Empfangsadresse zu dem Telekommunikations-Endgerät bezüglich der Verwendung zum Empfang von Daten über die unidirektionale Schnittstelle eine zeitlich begrenzte Gültigkeitsdauer aufweist. Damit kann beispielsweise erreicht werden, dass in regelmäßigen Zeitabständen überprüft wird, ob eine bestimmte Empfangsadresse überhaupt noch verwendet wird. Wenn dies nicht der Fall ist, so wird zum Beispiel dem Telekommunikations-Endgerät keine Empfangsadresse mehr zugewiesen und dieses muss gegebenenfalls bei Wiederaufnahme der Datenübertragung eine neue Empfangsadresse erhalten.

Zur Erhöhung der Sicherheit für den Nutzer des Telekommunikations-Endgeräts bzw. des Betreibers der Dienste-Steuereinheit kann vorgesehen sein, dass die Vielzahl verfügbarer Empfangs-adressen und/oder die Empfangsadressen-Information und/oder die neue Anzahl verfügbarer Empfangsadressen innerhalb des Informations-Datenstroms verschlüsselt zum Telekommunikations-Endgerät übertragen werden. Auf diese Weise wird sichergestellt, dass nur ein Besitzer des entsprechenden Schlüssels zu den genannten Empfangs-Adressdaten Zugang hat. Die Verteilung des Schlüssels an die entsprechend legitimierten Benutzer kann dann kontrolliert erfolgen. Bei Erhalt einer solchen Adress-Information durch die Dienste-Steuereinheit weiß diese dann automatisch, dass der Sender eine entsprechende Berechtigung (nämlich den Schlüssel) hat. Dieses Verfahren vereinfacht die Sicherheitsüberprüfung der genannten Adressinformation bzw. die Legitimation des Telekommunikations-Endgeräts und des entsprechenden Benutzers.

Weiterhin kann vorgesehen sein, dass aus der Vielzahl verfügbarer Empfangsadressen und/oder der Empfangsadresseninformation vom Telekommunikations-Endgerät Berechtigungs-Informationen entnommen werden, mit welchen das Telekommunikations-Endgerät der Dienste-Steuereinheit die Berechtigung zur Verwendung der Vielzahl verfügbarer Empfangsadressen mitteilen kann oder mitteilt. Auch mit diesem Verfahren kann die Datensicherheit bei der Übertragung von Adressinformation oder Dienste-Daten erhöht werden. So können beispielsweise innerhalb der genannten Adressinformationen Schlüssel-Daten enthalten sein, welche das Telekommunikations-Endgerät zur Legitimierung verwenden kann. Weiterhin können innerhalb der Adressinformation Daten integriert sein, welche nur nach Mitteilung spezifischer Informationen gelesen werden können oder welche nach einem besonderen Verfahren weiterverarbeitet werden müssen.

Auf diese Weise kann das Telekommunikations-Endgerät Legitimierungsdaten erstellen, welche dann die Zulässigkeit der Adress-Anfrage an die Dienste-Steuereinheit bestätigen. Es kann auch vorgesehen sein, dass allein die Tatsache, dass das Telekommunikations-Endgerät in der Lage war, die entsprechende Adressinformation zu lesen, als Legitimation ausreicht. Dies kann beispielsweise in Fällen vorgesehen sein, in welchen bereits zum Lesen des Informations-Datenstroms spezielle Vorkenntnisse (z.B. Schlüssel, Kanalcodierung, Kanalformat, Frequenzen, oder Ähnliches) notwendig sind.

Die vorstehend genannte Aufgabe wird ebenfalls gelöst von einem Telekommunikations-Netz, umfassend
- eine Dienste Steuerungsstelle mit einer unidirektionalen Schnittstelle zum Senden von Daten und einer bidirektionalen Schnittstelle zum Senden und Empfangen von Daten und
- ein Telekommunikations-Endgerät mit einer unidirektionalen Geräte-Schnittstelle zum Empfangen von Daten und einer bidirektionalen Geräte-Schnittstelle zum Senden und Empfangen von Daten, wobei das Telekommunikations-Netz zur Durchführung eines Verfahrens gemäß der vorstehenden Beschreibung ausgebildet ist.

Weiterhin wird die vorstehende Aufgabe gelöst von einem Telekommunikations-Endgerät mit einer unidirektionalen Geräte-Schnittstelle zum Empfangen von Daten von einer Dienste-Steuerungsstelle und einer bidirektionalen Geräte-Schnittstelle zur Kommunikation mit der Dienste-Steuerungsstelle, wobei das Telekommunikations-Endgerät zur Durchführung eines Verfahrens gemäß der vorstehenden Beschreibung ausgebildet ist.

Weiterhin kann die unidirektionale Geräte-Schnittstelle des Telekommunikations-Endgeräts zum Empfangen von Daten als Funk-Schnittstelle ausgebildet sein. Außerdem kann die bidirektionale Geräte-Schnittstelle zum Senden und Empfangen von Daten als Funk-Schnittstelle, insbesondere nach dem GSM, GPRS, UMTS, CTMA 2000, DECT, WLAN oder Bluetooth-Standard ausgebildet sein.

Mit einem derartigen Telekommunikations-Endgerät oder einem vorstehend genannten Telekommunikations-Netz lässt sich die Zugangsverhandlung vereinfachen und/oder die Datensicherheit bei der Zuordnung einer Empfangsadresse zu einem Telekommunikations-Endgerät zum Empfang von Daten über die unidirektionale Geräte-Schnittstelle erhöhen.

Die vorstehend genannte Aufgabe wird ebenfalls gelöst von einer Dienste-Steuerungsstelle zu Kommunikation mit einem Telekommunikations-Endgerät über eine bidirektionale Schnittstelle und zur Übertragung von Daten von der Dienste-Steuerungsstelle an das Telekommunikations-Endgerät über eine unidirektionale Schnittstelle, wobei die Dienste-Steuerungsstelle zur Durchführung eines Verfahrens gemäß der vorstehenden Beschreibung ausgebildet ist.

Die Dienste-Steuerungsstelle kann eine Netzwerk-Servereinrichtung zur Bereitstellung der Vielzahl verfügbarer Empfangsadressen und/oder der Empfangsadresseninformation umfassen. Weiterhin kann die Dienste-Steuerungsstelle eine Diensteanbieter-Einrichtung zur Bereitstellung der Dienste-Daten umfassen. Eine Netzwerk-Servereinrichtung kann z.B. der Server in einem IP-Netz sein, welcher die Zuteilung und Verwaltung der verwendeten IP-Adressen übernimmt. Dieser kann dann beispielsweise verfügbare IP-Adressen der Diensteanbieter-Einrichtung mitteilen. Weiterhin kann die Netzwerk-Servereinrichtung derart ausgebildet sein, dass sie bereits verwendete IP-Adressen aus einer Liste freier IP-Adressen streicht und/oder eine einem bestimmten Telekommunikations-Endgerät zugeordnete IP-Adresse der Diensteanbieter-Einrichtung mitteilt. Diese kann dann diese zugewiesene Empfangsadresse zur Übertragung von Daten an das Telekommunikations-Endgerät verwenden. Die Diensteanbieter-Einrichtung und die Dienste-Daten können beispielsweise gemäß der im Zusammenhang mit der Beschreibung des erfindungsgemäßen Verfahrens gemachten Erläuterungen ausgebildet sein.

Weiterhin kann vorgesehen sein, dass die Netzwerk-Servereinrichtung zur Kommunikation mit dem Telekommunikations-Endgerät und der Diensteanbieter-Einrichtung ausgebildet ist. Die Diensteanbieter-Einrichtung kann zur Kommunikation mit der Netzwerk-Servereinrichtung und zur Übertragung des Informations-Datenstroms an das Telekommunikations-Endgerät über die unidirektionale Geräteschnittstelle eingerichtet sein. Bei einer derartigen Verknüpfung kann die Netzwerk-Servereinrichtung die Verhandlung mit dem Telekommunikations-Endgerät über eine Empfangsadresse über die bidirektionale Schnittstelle übernehmen. Die Diensteanbieter-Einrichtung kann die Datenübertragung zum Telekommunikations-Endgerät über die unidirektionale Schnittstelle vornehmen. Die entsprechenden Adressinformationen können dann zwischen der Netzwerk-Servereinrichtung und der Diensteanbieter-Einrichtung ausgetauscht werden.

Die Netzwerk-Servereinrichtung und die Diensteanbieter-Einrichtung können beispielsweise innerhalb eines elektronischen Geräts integriert sein. Diese Einrichtungen können aber auch als separate Geräte, gegebenenfalls auch an unterschiedlichen Orten, ausgebildet sein.

Weitere vorteilhafte Ausgestaltungen sind in den Unteransprüchen enthalten.

Im Folgenden wird die Erfindung beispielhaft mit Bezug auf die beiliegenden Figuren erläutert. Es zeigen:
- Figur 1:: Telekommunikationsnetz mit Nachrichtenfluss bei der Zuweisung einer Empfangsadresse;
- Figur 2:: Flussdiagramm für Verfahrensschritte bei der Zuweisung einer Empfangsadresse.

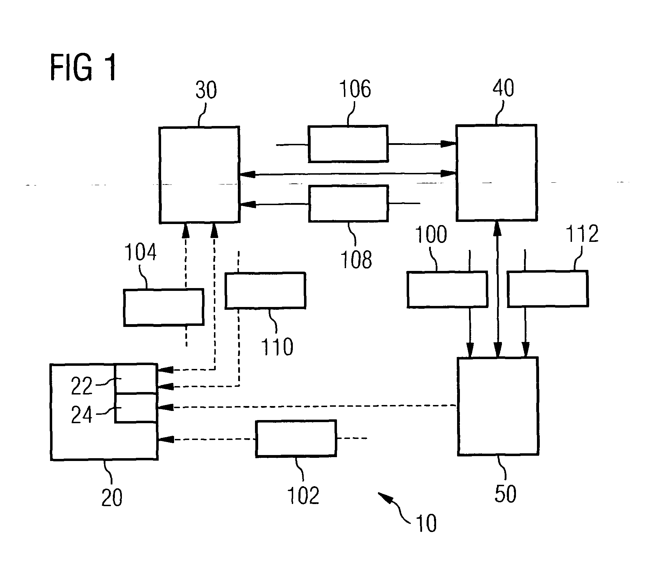

Figur 1 stellt ein Telekommunikationsnetz 10 mit einem Mobiltelefon 20, einem GPRS-Mobilfunknetz 30 zur Kommunikation mit dem Mobiltelefon 20 über eine bidirektionale Funkschnittstelle 22 des Mobiltelefons 20 dar. Das GPRS-Mobilfunknetz 30 verfügt über eine bidirektionale Schnittstelle zu einem IP-Server 40 (IP: Internet Protocol), welche weiterhin über eine bidirektionale Schnittstelle zu einem DvB-Anbieter 50 verfügt (DvB: Digital Video Broadcast). Der DvB-Anbieter 50 versendet DvB-Daten an das Mobiltelefon 20, über eine DvB-Luftschnittstelle. Diese DvB-Daten werden vom Mobiltelefon 20 über dessen unidirektionale DvB-Schnittstelle 24 empfangen.

Der IP-Server 40 sendet eine Nachricht 100 mit bisher noch unbenutzten IP-Adressen und/oder einem IP-Adress-Präfix an den DvB-Anbieter. Dieser integriert diese Adressdaten in allgemein für alle Benutzer ausgestrahlte DvB-Daten zu einem Informationsdatenstrom 102, der vom DvB-Anbieter unter anderem an das Mobiltelefon über die DvB-Schnittstelle verschickt wird.

Nachdem das Mobiltelefon 20 aus den in den DvB-Daten 102 enthaltenen Informationen eine Empfangsadresse ausgewählt hat, sendet das Mobiltelefon 20 eine Nachricht 104 mit der ausgewählten Empfangsadresse an das GPRS-Netz 30. Dieses leitet diese Information als Nachricht 106 an den IP-Server 40 weiter. Der IP-Server sendet eine Information über die akzeptierte ausgewählte Empfangsadresse oder eine neu zugewiesene Empfangsadresse in einer Antwortnachricht 108 an das GPRS-Netz, welches diese Information in einer Nachricht 110 über die GPRS-Luftschnittstelle an das Mobiltelefon 20 überträgt. Weiterhin wird die zugewiesene Empfangsadresse (dies ist entweder die akzeptierte ausgewählte Empfangsadresse oder die neu zugewiesene Empfangsadresse) in einer Nachricht 112 an den DvB-Anbieter übertragen, welcher dann mit dieser Information ausgewählte DvB-Daten speziell an das Mobiltelefon 20 über die DvB-Schnittstelle 24 versenden kann.

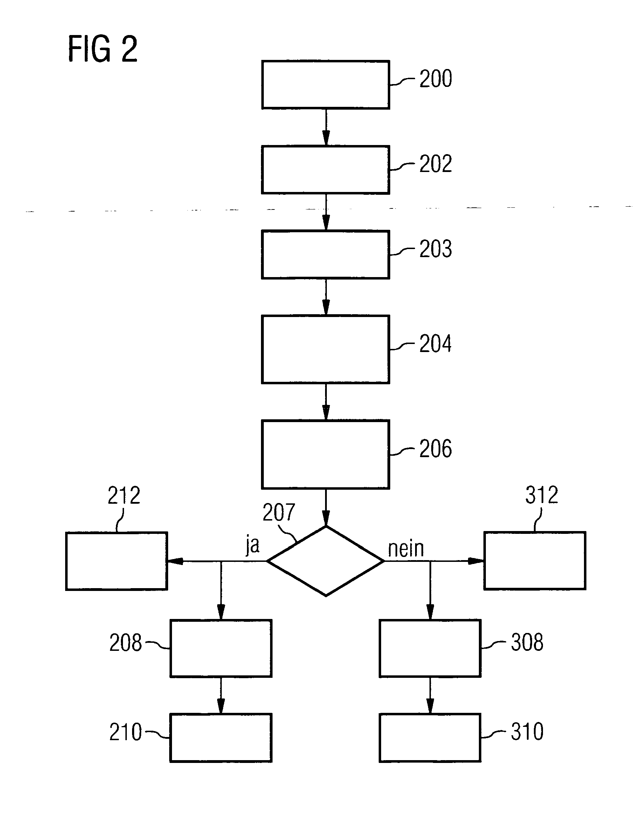

Figur 2 stellt ein Flussdiagramm zum Ablauf der in Figur 1 dargestellten Verhandlungen über eine Empfangsadresse dar.

In einem ersten Schritt 200 werden freie IP-Nummern oder ein IP-Address-Präfix dem DvB-Anbieter zur Verfügung gestellt.

Im Schritt 202 werden DvB-Daten mit den integrierten freien IP-Nummern oder/und dem IP-Address-Präfix an das Mobiltelefon 20 übertragen.

In einem nächsten Schritt 203 wählt das Mobiltelefon 20 eine IP-Nummer aus den mit den DvB-Daten übertragenen freien IP-Nummern aus. Das Mobiltelefon kann auch eine ausgewählte IP-Adresse unter Verwendung des IP-Adress-Präfix und einer im Mobiltelefon gespeicherten Geräte-Kennung, beispielsweise der IMEI oder der MAC-Adresse, generieren.

Die ausgewählte IP-Nummer wird in einem nächsten Schritt 204 an das GPRS-Netz 30 übertragen. Die ausgewählte IP-Nummer wird dann weiter in einem Schritt 206 vom GPRS-Netz 30 an den IP-Server 40 übertragen.

Der IP-Server überprüft in einem Schritt 207, ob die ausgewählte IP-Nummer bereits verwendet wird.

Wenn die ausgewählte IP-Nummer noch nicht verwendet wird, wird in einem Schritt 312 vom IP-Server eine Nachricht über die ausgewählte IP-Nummer an den DvB-Anbieter 50 versendet. In einem weiteren Schritt 308 kann unter Umständen eine Bestätigung mit der IP-Nummer an das GPRS Netz 30 und im Schritt 310 an das Mobiltelefon 20 geschickt werden. Das Telekommunikations-Endgerät kann die Zuweisung der nachgefragten IP-Adresse durch den IP-Server zum Beispiel auch daran erkennen, dass diese IP-Nummer in der Empfangsadressen-Information nicht mehr enthalten ist. Diese IP-Nummer kann der DvB-Anbieter dann zur Übertragung von DvB-Daten speziell an das Mobiltelefon 20 verwenden.

Wenn die ausgewählte IP-Nummer bereits verwendet wird, weist der IP-Server 40 dem Mobiltelefon 20 eine noch freie IP-Nummer zu, welche der IP-Server 40 in einem Schritt 208 an das GPRS-Netz 30, und dieses in einem weiteren Schritt 210 an das Mobiltelefon 20 schickt. Weiterhin teilt der IP-Server 40 diese zugewiesene IP-Nummer in einem Schritt 212 dem DvB-Anbieter mit. Dieser verwendet dann die zugewiesene IP-Nummer zur Übertragung spezieller DvB-Daten an das Mobiltelefon 20.

Die vorliegende Erfindung beschreibt ein verbessertes Verfahren zur Zuweisung einer Empfangsadresse zu einem Telekommunikations-Endgerät, wobei eine Vielzahl verfügbarer Empfangsadressen von einer Dienste-Steuerungsstelle bereitgestellt und innerhalb eines allgemeinen Informations-Datenstroms über eine unidirektionale Datenschnittstelle an das Telekommunikations-Endgerät übertragen wird. Das Telekommunikations-Endgerät entnimmt dem Datenstrom eine verfügbare Empfangsadresse und teilt die ausgewählte Empfangsadresse in einer Bestätigungs-nachricht der Dienste-Steuerungsstelle mit. Auf diese Weise lässt sich die Verhandlung der Empfangsadresse zwischen Telekommunikations-Endgerät und Dienste-Steuerungsstelle deutlich gegenüber dem Stand der Technik vereinfachen, was die Leistungsfähigkeit und die Belastbarkeit der Dienste-Steuerungsstelle und des Telekommunikations-Endgeräts erhöht. Weiterhin lässt sich durch dieses Verfahren auch die Datensicherheit bei der Übertragung von Daten von der Dienste-Steuerungsstelle zum Telekommunikations-Endgerät über die unidirektionale Schnittstelle erhöhen.

### Bezugszeichenliste

- 10: Telekommunikationsnetz
- 20: Mobiltelefon
- 22: Bidirektionale GPRS-Schnittstelle
- 24: Unidirektionale DVB-Schnittstelle
- 30: GPRS-Netz
- 40: Netzwerk-Server
- 50: DvB-Provider

- 100: Liste mit verfügbaren IP-Nummern oder
- 102: DvB-Daten mit eingefügten verfügbaren IP-Nummern oder Adress-Präfix
- 104: Nachricht über geplante Verwendung einer ausgewählten IP-Nummer
- 106: Nachricht über geplante Verwendung einer ausgewählten IP-Nummer
- 108: Antwortnachricht des Netzwerk-Servers auf die Nachrichten 104 und 106
- 110: Antwortnachricht des Netzwerk-Servers auf die Nachrichten 104 und 106
- 112: Nachricht über verwendete IP-Nummer

- 200: Zurverfügungstellung von IP-Nummern oder einer IP-Adress-Präfix
- 202: Übertragung von DvB-Daten mit integrierten IP-Nummern oder IP-Adress-Präfix
- 203: Auswahl einer ausgewählten IP-Nummer aus den zurverfügunggestellten IP-Nummern oder Erstellen einer ausgewählten IP-Nummer unter Verwendung des IP-Adress-Präfix
- 204: Übertragung der ausgewählten IP-Nummer an das GPRS-Netz
- 206: Übertragung der ausgewählten IP-Nummer an den Netzwerk-Server
- 207: Überprüfung: wird die ausgewhlte IP-Nummer bereits verwendet?
- 208: Übertragung einer anderen zu verwendenden IP-Nummer an das GPRS-Netz
- 210: Übertragung einer anderen zu verwendenden IP-Nummer an das Mobiltelefon
- 212: Senden einer Mitteilung an den DvB-Provider, die die neu vergebene IP-Nummer aus dem DvB-Datenstrom zu entfernen
- 308: Bestätigung der angefragten IP-Nummer an das GPRS-Netz
- 310: Bestätigung der angefragten IP-Nummer an das Mobiltelefon
- 312: Senden einer Mitteilung an den DvB-Provider, die ausgewählte IP-Nummer aus dem DvB-Datenstrom zu entfernen

### Zeichnungserläuterung zu Fig. 1:

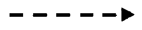 Funkverbindung (unidirektional)
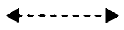 Funkverbindung (bidirektional)
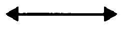 Festverbindung (bidirektional)

## Patentansprüche

1. Verfahren zur Zuweisung einer Empfangsadresse zu einem Telekommunikations-Endgerät (20) mit einer unidirektionalen Datenschnittstelle (24), umfassend die Schritte:
a.) Bereitstellung einer Vielzahl verfügbarer Empfangsadressen von einer Dienste-Steuerungsstelle (100, 200);
b.) Empfang eines Informations-Datenstroms (102, 202), umfassend Dienste-Daten von der Dienste-Steuerungsstelle und die Vielzahl verfügbarer Empfangsadressen, durch das Telekommunikations-Endgerät (20) über die unidirektionale Datenschnittstelle (24);
c.) Auswahl einer ausgewählten Empfangsadresse (203) durch das Telekommunikations-Endgerät (20) aus der Vielzahl verfügbarer Empfangsadressen;
d.) Übertragung einer Bestätigungs-Nachricht bezüglich der ausgewählten Empfangsadresse (104, 106, 204, 206) vom Telekommunikations-Endgerät über eine bidirektionale Schnittstelle (22) an die Dienste-Steuerungsstelle (40, 50).

2. Verfahren zur Zuweisung einer Empfangsadresse zu einem Telekommunikations-Endgerät (20) mit einer unidirektionalen Datenschnittstelle, umfassend die Schritte:
a.) Bereitstellung einer Empfangsadressen-Information von einer Dienste-Steuerungsstelle (100, 200);
b.) Empfang eines Informations-Datenstroms, umfassend Dienste-Daten von der Dienste-Steuerungsstelle und die Empfangsadressen-Information (102, 202), durch das Telekommunikations-Endgerät (20) über die unidirektionale Datenschnittstelle (24);
c.) Erstellen einer ausgewählten Empfangsadresse (203) durch das Telekommunikations-Endgerät (20) aus der Empfangsadressen-Information und einer im Telekommunikations-Endgerät (20) gespeicherten Geräte-Kennung;
d.) Übertragung einer Bestätigungs-Nachricht bezüglich der ausgewählten Empfangsadresse (104, 106, 204, 206) vom Telekommunikations-Endgerät (20) über eine bidirektionale Schnittstelle (22) an die Dienste-Steuerungsstelle (40, 50).

3. Verfahren nach Anspruch 1 oder 2,
**dadurch gekennzeichnet,**
**dass** Daten durch das Telekommunikations-Endgerät (20) über die unidirektionale Schnittstelle (24) unter Verwendung der ausgewählten Empfangsadresse empfangen werden oder empfangbar sind.

4. Verfahren nach einem der Ansprüche 1 bis 3,
umfassend nach dem Schritt d.) einen Schritt
e.) Übertragung einer Antwort-Nachricht (108, 110, 208, 210, 308, 310) von der Dienste-Steuerungsstelle (40, 50) zum Telekommunikations-Endgerät (20), wobei die Antwort-Nachricht (108, 110) eine Information über eine zugewiesene Empfangsadresse für den Empfang von Daten durch das Telekommunikations-Endgerät (20) über die unidirektionale Schnittstelle (24) umfasst.

5. Verfahren nach Anspruch 4,
**dadurch gekennzeichnet,**
**dass** das Telekommunikations-Endgerät (20) die Antwort-Nachricht (108, 110) über die bidirektionale Schnittstelle (22) empfängt.

6. Verfahren nach einem der Ansprüche 1 bis 5,
umfassend nach dem Schritt d.) oder e.) einen Schritt
f.) Bereitstellung einer neuen Vielzahl verfügbarer Empfangsadressen von der Dienste-Steuerungsstelle (40, 50), wobei die neue Anzahl verfügbarer Empfangsadressen die ausgewählte und/oder die zugewiesene Empfangsadresse nicht umfasst.

7. Verfahren nach einem der Ansprüche 4 bis 6,
**dadurch gekennzeichnet,**
**dass** die Vielzahl verfügbarer Empfangsadressen als Pseudoadressen ausgebildet sind und die zugewiesene Empfangsadresse ungleich der ausgewählten Empfangsadresse ist.

8. Verfahren nach einem der Ansprüche 4 bis 7,
**dadurch gekennzeichnet,**
**dass** die zugewiesene Empfangsadresse gleich der ausgewählten Empfangsadresse ist, wenn die ausgewählte Empfangsadresse noch nicht vergeben wurde.

9. Verfahren nach einem der Ansprüche 4 bis 8,
**dadurch gekennzeichnet,**
**dass** die zugewiesene Empfangsadresse ungleich der ausgewählten Empfangsadresse ist, wenn die ausgewählte Empfangsadresse bereits vergeben wurde.

10. Verfahren nach einem der Ansprüche 1 bis 9,
**dadurch gekennzeichnet,**
**dass** die Zuordnung der ausgewählten Empfangsadresse und/oder der zugewiesenen Empfangsadresse zu dem Telekommunikations-Endgerät (20) bezüglich der Verwendung zum Empfang von Daten über die unidirektionale Schnittstelle (24) eine zeitlich begrenzte Gültigkeitsdauer aufweist.
Verhandlung beinhaltet für den Netzwerk-Server zum einen die Überprüfung der Zulässigkeit der Anfrage sowie die Überprüfung und Suche nach freien Empfangsadressen für das Mobiltelefon. Diese Vorgehensweise stellt einen beträchtlichen Aufwand für den Netzwerk-Server und das Mobiltelefon dar.
Daher ist es Aufgabe der vorliegenden Erfindung, ein vereinfachtes Verfahren zur Zuweisung einer Empfangs-Adresse zu einem Telekommunikations-Endgerät für den Datenempfang über eine unidirektionale Schnittstelle zur Verfügung zu stellen.
Diese Aufgabe wird gelöst durch ein Verfahren zur Zuweisung einer Empfangs-Adresse zu einem Telekommunikations-Endgerät über eine unidirektionale Datenschnittstelle, umfassend die Schritte:
a) Bereitstellung einer Vielzahl verfügbarer Empfangsadressen von einer Dienste-Steuerungsstelle;
b) Empfang eines Informations-Datenstroms, umfassend Dienste-Daten von der Dienste-Steuerungsstelle und die Vielzahl verfügbarer Empfangsadressen, durch das Telekommunikationsendgerät über die unidirektionale Datenschnittstelle;
c) Auswahl einer Empfangs-Adresse durch das Telekommunikations-Endgerät aus der Vielzahl verfügbarer Empfangsadressen;
d) Übertragung einer Bestätigungs-Nachricht bezüglich der ausgewählten Empfangs-Adresse vom Telekommunikations-Endgerät über eine bidirektionale Schnittstelle an die Dienste-Steuerungsstelle.
Dadurch, dass von der Dienste-Steuerungsstelle bereits verfügbare Empfangsadressen bereitgestellt werden und das Telekommunikations-Endgerät nur eine dieser möglichen Empfangsadressen entnehmen und der Dienste-Steuerungsstelle mitteilen muss, vereinfacht sich das Verfahren zur Zuweisung von Empfangsadressen gegenüber dem Stand der Technik erheblich, da

11. Verfahren nach einem der Ansprüche 1 bis 10,
**dadurch gekennzeichnet,**
**dass** die Vielzahl verfügbarer Empfangsadressen und/oder die Empfangsadressen-Information und/oder die neue Anzahl verfügbarer Empfangsadressen innerhalb des Informations-Datenstroms (102) verschlüsselt zum Telekommunikations-Endgerät (20) übertragen werden.

12. Verfahren nach einem der Ansprüche 1 bis 11,
**dadurch gekennzeichnet,**
**dass** aus der Vielzahl verfügbarer Empfangsadressen und/oder der Empfangsadressen-Information vom Telekommunikations-Endgerät (20) Berechtigungs-Informationen entnommen werden, mit welchen das Telekommunikations-Endgerät (20) der Dienste-Steuerungsstelle (40, 40) die Berechtigung zur Verwendung der Vielzahl verfügbarer Empfangsadressen mitteilen kann oder mitteilt.

13. Telekommunikations-Netz, umfassend
- eine Dienste-Steuerungsstelle (40, 50) mit einer unidirektionalen Schnittstelle zum Senden von Daten und einer bidirektionalen Schnittstelle zum Senden und Empfangen von Daten und
- ein Telekommunikations-Endgerät (20) mit einer unidirektionalen Geräte-Schnittstelle (24) zum Empfangen von Daten und einer bidirektionalen Geräte-Schnittstelle (22) zum Senden und Empfangen von Daten,
**dadurch gekennzeichnet,**
**dass** das Telekommunikations-Netz zur Durchführung eines Verfahrens gemäß einem der vorstehenden Ansprüche ausgebildet ist.

14. Telekommunikations-Endgerät (20) mit einer unidirektionalen Geräte-Schnittstelle (24) zum Empfangen von Daten von einer Dienste-Steuerungsstelle (40, 50) und einer bidirektionalen Geräte-Schnittstelle (22) zur Kommunikation mit der Dienste-Steuerungsstelle (40, 50),
**dadurch gekennzeichnet,**
**dass** das Telekommunikations-Endgerät (20) zur Durchführung eines Verfahrens gemäß einem der Ansprüche 1 bis 12 ausgebildet ist.

15. Telekommunikations-Endgerät nach Anspruch 14,
**dadurch gekennzeichnet,**
**dass** die unidirektionale Geräte-Schnittstelle (24) zum Empfangen von Daten und/oder die bidirektionalen Geräte-Schnittstelle (22) zum Senden und Empfangen von Daten als Funk-Schnittstelle ausgebildet sind.

16. Dienste-Steuerungsstelle (40, 50) zur Kommunikation mit einem Telekommunikations-Endgerät (20) über eine bidirektionale Schnittstelle und zur Übertragung von Daten von der Dienste-Steuerungsstelle (40, 50) an das Telekommunikations-Endgerät (20) über eine unidirektionale Schnittstelle,
**dadurch gekennzeichnet,**
**dass** die Dienste-Steuerungsstelle (40, 50) zur Durchführung eines Verfahrens gemäß einem der Ansprüche 1 bis 12 ausgebildet ist.

17. Dienste-Steuerungsstelle nach Anspruch 16,
**dadurch gekennzeichnet,**
**dass** die Dienste-Steuerungsstelle (40, 50) eine Netzwerk-Servereinrichtung (40) zur Bereitstellung der Vielzahl verfügbarer Empfangsadressen und/oder der Empfangsadressen-Information sowie eine Diensteanbieter-Einrichtung (50) zur Bereitstellung der Dienste-Daten umfasst.

18. Dienste-Steuerungsstelle nach Anspruch 17,
**dadurch gekennzeichnet,**
**dass** die Netzwerk-Servereinrichtung (40) zur Kommunikation mit dem Telekommunikations-Endgerät (20) und der
Diensteanbieter-Einrichtung (50) eingerichtet ist und die Diensteanbieter-Einrichtung (50) weiterhin zur Übertragung des Informations-Datenstroms (102, 202) an das Telekommunikations-Endgerät (20) über die unidirektionale Geräteschnittstelle eingerichtet ist.

## Claims

1. Method for assigning a receiving address to a telecommunications terminal (20) using a unidirectional data interface (24), comprising the following steps:
a.) providing a multiplicity of available receiving addresses by a service control point (100, 200);
b.) receiving of an information datastream (102, 202) comprising service data from the service control point and the multiplicity of available receiving addresses by the telecommunications terminal (20) via the unidirectional data interface (24);
c.) selecting a selected receiving address (203) by the telecommunications terminal (20) from the multiplicity of available receiving addresses;
d.) transmitting an acknowledgement message with respect to the selected receiving address (104, 106, 204, 206) from a telecommunications terminal via a bidirectional interface (22) to the service control point (40, 50).

2. Method for assigning a receiving address to a telecommunications terminal (20) using a unidirectional data interface, comprising the following steps:
a.) providing receiving address information by a service control point (100, 200);
b.) receiving an information datastream comprising service data from the service control point and the receiving address information (102, 202) by the telecommunications terminal (20) via the unidirectional data interface (24);
c.) generating a selected receiving address (203) by the telecommunications terminal (20) from the receiving address information and a device identification stored in the telecommunications terminal (20);
d.) transmitting an acknowledgement message with respect to the selected receiving address (104, 106, 204, 206) from the telecommunications terminal (20) via a bidirectional interface (22) to the service control point (40, 50).

3. Method according to Claim 1 or 2, **characterized in that** data are received or can be received by the telecommunications terminal (20) via the unidirectional interface (24) by using the selected receiving address.

4. Method according to one of Claims 1 to 3, comprising, after step d.), a step e.) transmitting a response message (108, 110, 208, 210, 308, 310) from the service control point (40, 50) to the telecommunications terminal (20), the response message (108, 110) comprising information about an assigned receiving address for reception of data by the telecommunications terminal (20) via the unidirectional interface (24).

5. Method according to Claim 4, **characterized in that** the telecommunications terminal (20) receives a response message (108, 110) via the bidirectional interface (22).

6. Method according to one of Claims 1 to 5, comprising, after step d.) or e.), a step f.) providing a new multiplicity of available receiving addresses by the service control point (40, 50), the new number of available receiving addresses not comprising the selected and/or assigned receiving address.

7. Method according to one of Claims 4 to 6, **characterized in that** the multiplicity of available receiving addresses are arranged as pseudo addresses and the assigned receiving address is unequal to the selected receiving address.

8. Method according to one of Claims 4 to 7, **characterized in that** the assigned receiving address is equal to the selected receiving address if the selected receiving address has not yet been issued.

9. Method according to one of Claims 4 to 8, **characterized in that** the assigned receiving address is unequal to the selected receiving address if the selected receiving address has already been issued.

10. Method according to one of Claims 1 to 9, **characterized in that** the allocation of the selected receiving address and/or of the assigned receiving address to the telecommunications terminal (20) has a temporally limited validity period with respect to the use for the reception of data via the unidirectional interface (24).

11. Method according to one of Claims 1 to 10, **characterized in that** the multiplicity of available receiving addresses and/or the receiving address information and/or the new number of available receiving addresses are transmitted encrypted within the information datastream (102) to the telecommunications terminal (20).

12. Method according to one of Claims 1 to 11, **characterized in that** from the multiplicity of available receiving addresses and/or the receiving address information, the telecommunications terminal (20) takes authorization information by means of which the telecommunications terminal (20) can inform or does inform the service control point (40, 40) about the authorization for using the multiplicity of available receiving addresses.

13. Telecommunications network comprising
- a service control point (40, 50) with a unidirectional interface for sending data and a bidirectional interface for sending and receiving data and
- a telecommunications terminal (20) using a unidirectional device interface (24) for receiving data and a bidirectional device interface (22) for sending and receiving data,
**characterized in that** the telecommunications network is arranged for carrying out a method according to one of the preceding claims.

14. Telecommunications terminal (20) using a unidirectional device interface (24) for receiving data from a service control point (40, 50) and a bidirectional device interface (22) for communicating with the service control point (40, 50), **characterized in that** the telecommunications terminal (20) is arranged for carrying out a method according to one of Claims 1 to 12.

15. Telecommunications terminal according to Claim 14, **characterized in that** the unidirectional device interface (24) for receiving data and/or the bidirectional device interface (22) for sending and receiving data are arranged as a radio interface.

16. Service control point (40, 50) for communicating with a telecommunications terminal (20) via a bidirectional interface and for transmitting data from the service control point (40, 50) to the telecommunications terminal (20) via a unidirectional interface, **characterized in that** the service control point (40, 50) is arranged for carrying out a method according to one of Claims 1 to 12.

17. Service control point according to Claim 16, **characterized in that** the service control point (40, 50) comprises a network server device (40) for providing the multiplicity of available receiving addresses and/or the receiving address information and a service provider device (50) for providing the service data.

18. Service control point according to Claim 17, **characterized in that** the network server device (40) is arranged for communicating with the telecommunications terminal (20) and the service provider device (50) and the service provider device (50) is also arranged for transmitting the information datastream (102, 202) to the telecommunications terminal (20) via the unidirectional device interface.

## Revendications

1. Procédé pour allouer une adresse de réception à un terminal de télécommunications (20) au moyen d'une interface de données unidirectionnelle (24), comprenant les étapes de :
a) mise à disposition d'une pluralité d'adresses de réception disponibles par un centre de commande de services (100, 200) ;
b) réception par le terminal de télécommunications (20), par le biais de l'interface de données unidirectionnelle (24), d'un flux de données d'information (102, 202) comprenant des données de services du centre de commande de services et la pluralité d'adresses de réception disponibles ;
c) sélection d'une adresse de réception sélectionnée (203) par le terminal de télécommunications (20) parmi la pluralité d'adresses de réception disponibles ;
d) transmission d'un message de confirmation concernant l'adresse de réception sélectionnée (104, 106, 204, 206) du terminal de télécommunications au centre de commande de services (40, 50) par le biais d'une interface bidirectionnelle (22).

2. Procédé pour allouer une adresse de réception à un terminal de télécommunications (20) au moyen d'une interface de données unidirectionnelle, comprenant les étapes de :
a) mise à disposition d'une information d'adresses de réception par un centre de commande de services (100, 200) ;
b) réception par le terminal de télécommunications (20), par le biais de l'interface de données unidirectionnelle (24), d'un flux de données d'information comprenant des données de services du centre de commande de services et l'information d'adresses de réception (102, 202) ;
c) établissement par le terminal de télécommunications (20) d'une adresse de réception sélectionnée (203) à partir de l'information d'adresses de réception et d'un identifiant d'appareil mémorisé dans le terminal de télécommunications (20) ;
d) transmission d'un message de confirmation concernant l'adresse de réception sélectionnée (104, 106, 204, 206) du terminal de télécommunications au centre de commande de services (40, 50) par le biais d'une interface bidirectionnelle (22).

3. Procédé selon la revendication 1 ou 2, **caractérisé en ce que** des données sont reçues ou peuvent être reçues par le terminal de télécommunications (20) par le biais de l'interface unidirectionnelle (24) en utilisant l'adresse de réception sélectionnée.

4. Procédé selon l'une des revendications 1 à 3, comprenant, après l'étape d), une étape de
e) transmission d'un message de réponse (108, 110, 208, 210, 308, 310) du centre de commande de services (40, 50) au terminal de télécommunications (20), le message de réponse (108, 110) comprenant une information sur une adresse de réception allouée pour la réception de données par le terminal de télécommunications (20) par le biais de l'interface unidirectionnelle (24).

5. Procédé selon la revendication 4, **caractérisé en ce que** le terminal de télécommunications (20) reçoit le message de réponse (108, 110) par le biais de l'interface bidirectionnelle (22).

6. Procédé selon l'une des revendications 1 à 5, comprenant, après l'étape d) ou e), une étape de
f) mise à disposition d'une nouvelle pluralité d'adresses de réception disponibles par le centre de commande de services (40, 50), le nouveau nombre d'adresses de réception disponibles ne comprenant pas l'adresse de réception sélectionnée et/ou allouée.

7. Procédé selon l'une des revendications 4 à 6, **caractérisé en ce que** la pluralité d'adresses de réception disponibles est formée en tant que pseudo-adresses et l'adresse de réception allouée n'est pas identique à l'adresse de réception sélectionnée.

8. Procédé selon l'une des revendications 4 à 7, **caractérisé en ce que** l'adresse de réception allouée est identique à l'adresse de réception sélectionnée lorsque l'adresse de réception sélectionnée n'a pas encore été attribuée.

9. Procédé selon l'une des revendications 4 à 8, **caractérisé en ce que** l'adresse de réception allouée n'est pas identique à l'adresse de réception sélectionnée lorsque l'adresse de réception sélectionnée a déjà été attribuée.

10. Procédé selon l'une des revendications 1 à 9, **caractérisé en ce que** l'attribution de l'adresse de réception sélectionnée et/ou de l'adresse de réception allouée au terminal de télécommunications (20) relativement à l'utilisation pour la réception de données par le biais de l'interface unidirectionnelle (24) a une durée de validité limitée dans le temps.

11. Procédé selon l'une des revendications 1 à 10, **caractérisé en ce que** la pluralité d'adresses de réception disponibles et/ou l'information d'adresses de réception et/ou le nouveau nombre d'adresses de réception disponibles est/sont transmis(e)/s codé(e)/s au terminal de télécommunications (20) à l'intérieur du flux de données d'information (102).

12. Procédé selon l'une des revendications 1 à 11, **caractérisé en ce que** le terminal de télécommunications (20) trouve parmi la pluralité d'adresses de réception disponibles et/ou dans l'information d'adresses de réception des informations d'autorisation au moyen desquelles le terminal de télécommunications (20) peut communiquer ou communique au centre de commande de services (40, 50) l'autorisation d'utilisation de la pluralité d'adresses de réception disponibles.

13. Réseau de télécommunications, comprenant
- un centre de commande de services (40, 50) avec une interface unidirectionnelle pour l'émission de données et une interface bidirectionnelle pour l'émission et la réception de données et
- un terminal de télécommunications (20) avec une interface d'appareils unidirectionnelle (24) pour la réception de données et une interface d'appareils bidirectionnelle (22) pour l'émission et la réception de données,
**caractérisé en ce que**
le réseau de télécommunications est exécuté pour l'exécution d'un procédé selon une des revendications précédentes.

14. Terminal de télécommunications (20) avec une interface d'appareils unidirectionnelle (24) pour la réception de données d'un centre de commande de services (40, 50) et une interface d'appareils bidirectionnelle (22) pour la communication avec le centre de commande de services (40, 50),
**caractérisé en ce que**
le terminal de télécommunications (20) est exécuté pour l'exécution d'un procédé selon une des revendications 1 à 12.

15. Terminal de télécommunications selon la revendication 14, **caractérisé en ce que**
l'interface d'appareils unidirectionnelle (24) pour la réception de données et/ou l'interface d'appareils bidirectionnelle (22) pour l'émission et la réception de données est/sont exécutée/s en tant qu'interface/s radio.

16. Centre de commande de services (40, 50) pour la communication avec un terminal de télécommunications (20) par le biais d'une interface bidirectionnelle et pour la transmission de données du centre de commande de services (40, 50) au terminal de télécommunications (20) par le biais d'une interface unidirectionnelle,
**caractérisé en ce que**
le centre de commande de services (40, 50) est exécuté pour l'exécution d'un procédé selon une des revendications 1 à 12.

17. Centre de commande de services selon la revendication 16, **caractérisé en ce que**
le centre de commande de services (40, 50) comprend un dispositif serveur de réseau (40) pour la mise à disposition de la pluralité d'adresses de réception disponibles et/ou de l'information d'adresses de réception ainsi qu'un dispositif fournisseur de services (50) pour la mise à disposition des données de services.

18. Centre de commande de services selon la revendication 17, **caractérisé en ce que**
le dispositif serveur de réseau (40) est adapté pour communiquer avec le terminal de télécommunications (20) et le dispositif fournisseur de services (50) et le dispositif fournisseur de services (50) est adapté, en outre, pour transmettre le flux de données d'information (102, 202) au terminal de télécommunications (20) par le biais de l'interface d'appareils unidirectionnelle.
